# EUROPÄISCHE PATENTSCHRIFT

(11) **EP 3 960 361 B1**
(45) Veröffentlichungstag und Bekanntmachung des Hinweises auf die Patenterteilung: **20.03.2024**
(21) Anmeldenummer: 21192366.9
(22) Anmeldetag: 20.08.2021
(51) Int. Cl.: B23K 37/02, B23K 26/08, B23K 26/34, B23K 26/352

(54) **ROBOTERBASIERTE LASERBEARBEITUNGSANLAGE**
ROBOT-BASED LASER PROCESSING APPARATUS
INSTALLATION INDUSTRIELLE LASER ROBOTISÉE

(30) Priorität: 27.08.2020 DE 102020122465; 15.12.2020 DE 202020107266 U
(43) Veröffentlichungstag der Anmeldung: 02.03.2022
(73) Patentinhaber: ALOtec Dresden GmbH, 01723 Kesselsdorf (DE)
(72) Erfinder: Hensel, Eckehard, 01723 Kesselsdorf (DE); Kuhn, Clemens, 01723 Kesselsdorf (DE)
(74) Vertreter: Werner, André

(56) Entgegenhaltungen:
- DE-A1- 4 335 367
- DE-A1-102009 012 858
- DE-U1-202016 105 302
- US-A1- 2010 100 086
- US-A1- 2010 301 020

## Beschreibung

Die Erfindung betrifft eine roboterbasierte Laserbearbeitungsanlage mit einem auf einer Basis installierten Industrieroboter. Die Laserbearbeitungsanlage eignet sich insbesondere zum Laserhärten und zum Laserauftragschweißen, wobei sie flexibel an verschiedenen Einsatzszenarien anpassbar ist.

Laserbearbeitungsprozesse, wie das Laserhärten und das Laserauftragschweißen, dienen u. a. der Veredelung von Bauteiloberflächen, zur Erhöhung des Verschleißschutzes, zur Reparatur von verschlissenen Oberflächen sowie der additiven Fertigung von Bauteilen. Anwendungsbezogen werden entweder stationäre oder mobile Laserbearbeitungsanlagen für derartige Laserbearbeitungsprozesse eingesetzt; die jeweilige Auswahl richtet sich u. a. nach der Art des Laserbearbeitungsprozesses, nach Art und Größe der Bauteile und nach der Bearbeitungsumgebung.

Lasersysteme sind auch aus dem medizinischen Bereich bekannt. US 2010/100086 A1 beschreibt ein entsprechendes Behandlungsgerät für die Zahnarztpraxis.

Stationäre Laserbearbeitungsanlagen sind ortsgebunden - häufig innerhalb einer Laserschutzeinhausung - installiert. Sie sind zumeist sehr spezifisch auf den Bearbeitungszweck ausgerichtet. Einer der Nachteile stationärer Laserbearbeitungsanlagen ist die damit einhergehende geringe Flexibilität. Zudem limitiert der vorhandene Bauraum die Laserbearbeitung großer bzw. übergroßer Bauteile auf stationären Anlagen.

Eine Roboterhand für die 3-D-Bearbeitung von Werkstücken mit Laserstrahlung offenbart DE 43 35 367 A1. Zur Verbesserung der Sicherheit ist hier der Anschluss für das Lichtleitkabel an der roboterseitigen Handachse angebracht, wodurch die Laserstrahlung koaxial mit der Schwenkachse der werkstückseitigen Handachse einkoppelt.

Der US 2010/301020 ist ein stationäres Plasmabrenner-Schneidgerät als bekannt zu entnehmen, welches mittels einer Positioniereinrichtung in wenigstens 5 Freiheitsgraden bewegbar und hierdurch relativ zum Werkstück positionierbar ist.

Mobile Laseranlagen sind dagegen ortsflexibel verwendbar. Solche mobilen Anlagen kommen beispielsweise zur - meist lokalen - Laserbearbeitung an ortsfesten oder übergroßen Werkstücken zum Einsatz - im Regelfall innerhalb einer Schutzumhausung aus mobilen Laserschutzwänden. Eine solche mobile Laserbearbeitungsanlage beschreibt u. a. DE 20 2014 008 356 U1. Die mobilen Ausführungen von Laserbearbeitungsanlagen erreichen jedoch vielfach nicht die Prozessgenauigkeit der stationären Laserbearbeitungsanlagen.

Eine Bearbeitungseinrichtung für Werkstücke, umfassend eine Mehrzahl von Bearbeitungseinheiten, die mittels wenigstens eines Transportmittels von einer Parkposition zu einer Bearbeitungsposition transportierbar sind, ist in DE 20 2016 105 302 U1 gezeigt.

DE 10 2009 012 858 A1 beschreibt eine Laserbearbeitungseinrichtung, bei der Laserquelle und Arbeitskopf räumlich getrennt sind, wobei der Laserstrahl über einen Sender der Laserquelle zu einem Strahlempfänger des Bearbeitungskopfs übertragen wird.

Bezüglich der Art der Anlage - stationär oder mobil - muss sich der Betreiber bereits bei Anschaffung festlegen; ein Anlagenbetreiber ist folglich an die jeweiligen Vor- und Nachteile der ausgewählten Anlage gebunden und damit letztlich unflexibel bei Bedarfsänderungen.

Aufgabe der Erfindung ist es daher, eine flexibel einsetzbare, roboterbasierte Laserbearbeitungsanlage bereitzustellen, die für die spezifischen Anwendung - bei Minimierung der jeweiligen Nachteile stationärer bzw. mobiler Laserbearbeitungsanlagen - optimal angepasst bzw. gerüstet ist.

Diese Aufgabe wird durch eine roboterbasierte Laserbearbeitungsanlage mit den kennzeichnenden Merkmalen nach dem Anspruch 1 gelöst; zweckmäßige Weiterbildungen der Erfindung sind in den Ansprüchen 2 bis 7 aufgeführt.

Nach Maßgabe der Erfindung umfasst die Laserbearbeitungsanlage mindestens eine Basis und einen auf dieser Basis angebrachten Industrieroboter. Mittels des Industrieroboters ist der Bearbeitungslaser der Laserbearbeitungsanlage relativ zu einem oder mehreren zu bearbeitenden Werkstücken positionier- und ausrichtbar. Als Handlingmaschine für den Laserbearbeitungsprozess kann der Industrieroboter hierzu einen mehrachsig bewegbaren Roboterarm aufweisen.

Der Industrieroboter ist sockelseitig, d. h. mit dem Sockel des Roboterarms, auf einem plattenförmigen Adapter angebracht. Diese Adapter ist mittels lösbarer Befestigungsmittel passgenau mit einem an der Basis befindlichen Adaptergegenstück verbindbar.

Die Basis, die auch als Basisplattform oder als Basiseinheit bezeichnet wird, ist wahlweise eine stationäre Basis oder eine mobile Basis.

Die Laserbearbeitungsanlage kann sowohl eine stationäre als auch eine mobile Basis umfassen. Der am Adapter angebrachte Industrieroboter wird- je nach Anwendungsfall - entweder mit der stationären oder mit der mobilen Basis verbunden. Eine solche Hybridanlage ist ortsgebunden im industriellen Umfeld nutzbar, kann bei Bedarf jedoch auch für den mobilen Feldeinsatz umgerüstet werden.

Der Adapter, das Adaptergegenstück und die Befestigungsmittel bilden eine Schnellwechseleinrichtung, die die Demontage des Industrieroboters von der einen und die Montage des Industrieroboters auf die andere Basis innerhalb kürzester Zeit ermöglicht. Die erreichbare Umrüstzeit liegt erfahrungsgemäß im Bereich von circa zwei Stunden.

Der plattenförmige Adapter gewährleistet - auch bei mobilem Einsatz - eine exakte Ausrichtung des Industrieroboters und bildet so die Grundlage für eine hohe Prozessgenauigkeit beim Laserbearbeiten, die der Prozessgenauigkeit beim Laserbearbeiten mit stationären Laserbearbeitungsanlagen nahekommt.

Vorteile bietet die einfache und schnelle Montier- bzw. Demontierbarkeit zudem beim Transport der Laserbearbeitungsanlage.

Zur passgenauen Verbindung von Adapter und Adaptergegenstück können diese beispielsweise mittels Stiftpassungen zueinander ausgerichtet sein. Als lösbare Befestigungsmittel sind verschraubbare Bolzen geeignet.

Das Adaptergegenstück ist - ebenso wie der Adapter - plattenförmig ausgebildet. Als Plattenwerkstoff hat sich Stahl bewährt.

Bei der erfindungsgemäßen Laserbearbeitungsanlage mit stationärer Basis kann das Adaptergegenstück u. a. im oder am Erd- bzw. Fußboden ausgebildet sein. Es kann ferner - auch in Form der oben beschriebenen Platte - auf einem Maschinenrahmen oder auf einer Lineareinheit (als stationärer Basis) installiert sein.

Die Basis bzw. Basisplattform der erfindungsgemäßen Laserbearbeitungsanlage mit mobiler Basis ist vorzugsweise ein Fahrwerk, zum Beispiel ein Rollenfahrwerk oder ein Raupen- bzw. Kettenfahrwerk.

Die mobile Basis kann ferner die simple Form der bereits oben beschriebenen Platte einnehmen; die Mobilität in einer solchen Ausführung ist durch Transport mit Staplern oder Kränen erreichbar.

Neben der Basis bzw. Basisplattform und dem Industrieroboter kann die Laserbearbeitungsanlage weitere Komponenten umfassen, zum Beispiel Peripheriegeräte, Laserschutzwände oder Zubehörwerkzeuge.

Bei Ausführung der erfindungsgemäßen Laserbearbeitungsanlage mit mobiler Basis und solchen zusätzlichen Komponenten ist diese vorzugsweise in zwei Stationen aufteilbar, wobei die erste Station den auf der Basis installierten Industrieroboter, die Laserschutzwände sowie das Zusatzwerkzeug und die zweite Station die Peripheriegeräte umfasst. Zu den Peripheriegeräten zählen die Schaltschränke, die Steuerung, die Draht- oder Pulverförderer (für das Laserauftragschweißen) ebenso wie die Laserquelle des Bearbeitungslasers. Die über einen Lichterleiter mit der Laserquelle verbundene Laseroptik befindet sich dagegen am Industrieroboter und ist Teil der ersten Station. Die auf die zwei Stationen aufgeteilte Laserbearbeitungsanlage kann als Luftfracht auch in Passagiermaschinen mitgeführt werden.

Die Erfindung ist nachfolgend anhand von Ausführungsbeispielen und mit Bezug auf die schematischen Zeichnungen näher erläutert, wobei gleiche oder ähnliche Merkmale mit gleichen Bezugszeichen versehen sind. Dazu veranschaulichen:
- Fig. 1:: die Laserbearbeitungsanlage mit stationärer Basis in Form einer Lineareinheit in perspektivischer Ansicht,
- Fig. 2:: die Laserbearbeitungsanlage mit mobiler Basis in Form eines Raupenfahrwerks in perspektivischer Ansicht, und
- Fig. 3:: die Laserbearbeitungsanlage mit mobiler Basis in Form eines Raupenfahrwerks in der Seitenansicht.

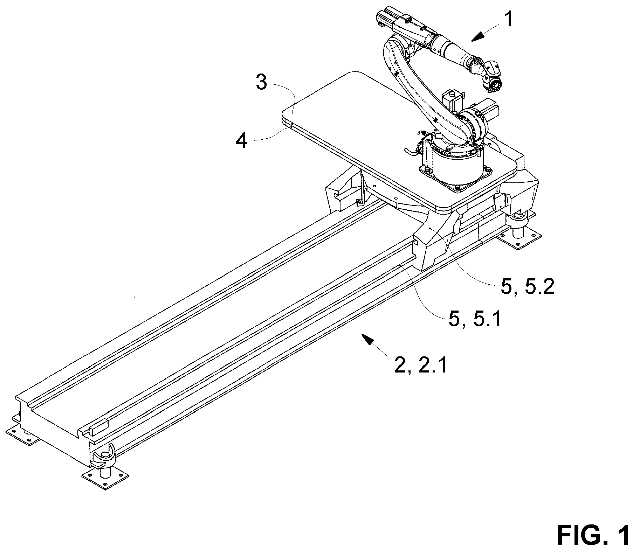

Die Laserbearbeitungsanlage gemäß der Fig. 1 besitzt die als Lineareinheit 5 ausgebildete stationäre Basis 2, 2.1. Die Lineareinheit 5 weist ihrerseits den Schlitten 5.2 auf, der in den Schienen 5.1 der Lineareinheit 5 geführt ist. Auf dem Schlitten 5.2 der Lineareinheit 5 ist das plattenförmige Adaptergegenstück 4 angebracht.

Der Industrieroboter 1, hier ein serieller 6-Achs-Knickarm-Roboter, ist mit dem Sockel des Roboterarms am Adapter 3 verschraubt.

Der Adapter 3 und das Adaptergegenstück 4 sind passgenau auf- bzw. übereinander angeordnet und mittels (nicht dargestellter) Befestigungsmittel lösbar verbunden.

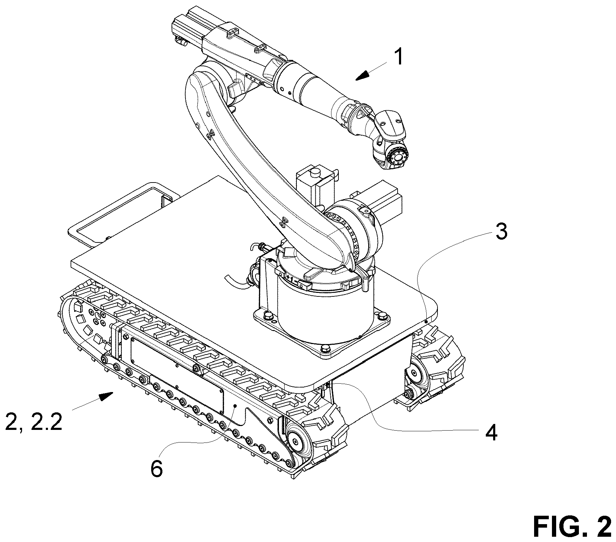

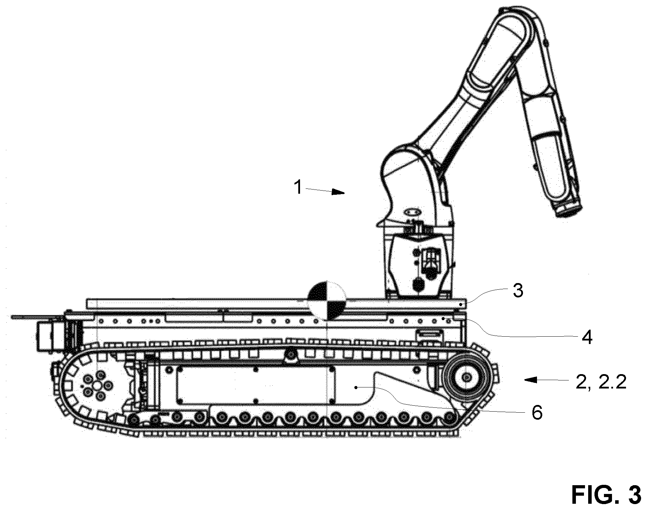

Die Fig. 2 und 3 zeigen wiederum den auf dem Adapter 3 installierten Industrieroboter 1 (in einer mit Fig. 1 vergleichbaren Ausführung).

Die mobile Basis 2, 2.2 der Laserbearbeitungsanlage gemäß der Fig. 2 und 3 ist ein Fahrwerk 6 in Form eines Raupenfahrwerks, dessen oberen Abschluss das Adaptergegenstück 4 bildet.

### Bezugszeichenliste

- 1: Industrieroboter
- 2: Basis
- 2.1: stationäre Basis
- 2.2: mobile Basis
- 3: Adapter
- 4: Adaptergegenstück
- 5: Lineareinheit
- 5.1: Schiene
- 5.2: Schlitten
- 6: Fahrwerk

## Patentansprüche

1. Laserbearbeitungsanlage zum Laserhärten und zum Laserauftragschweißen eines oder mehrerer zu bearbeitender Werkstücke, umfassend einen Bearbeitungslaser, mindestens eine Basis (2) und einen auf der Basis (2) angebrachten Industrieroboter (1) zur Positionierung und Ausrichtung des Bearbeitungslasers der Laserbearbeitungsanlage relativ zu dem einem oder den mehreren zu bearbeitenden Werkstücken, wobei
- der Industrieroboter (1) einen mehrachsig bewegbaren Roboterarm mit einem Sockel aufweist,
- der Industrieroboter (1) mit dem Sockel des Roboterarms an einem plattenförmigen Adapter (3) der Laserbearbeitungsanlage verschraubt ist, **dadurch gekennzeichnet, dass**,
- der plattenförmige Adapter (3) mittels lösbarer Befestigungsmittel mit einem an der Basis (2) befindlichen, plattenförmig ausgebildeten Adaptergegenstück (4) der Laserbearbeitungsanlage verbindbar ist,
- die Laserbearbeitungsanlage sowohl eine stationäre Basis (2.1) als auch eine mobile Basis (2.2) umfasst, wobei der am Adapter (3) angebrachte Industrieroboter entweder mit der stationären Basis (2.1) oder mit der mobilen Basis (2.2) verbunden ist, wobei der Adapter (3) und das Adaptergegenstück (4) passgenau übereinander angeordnet sind, und
- der plattenförmige Adapter (3) als quaderförmige Platte mit der Grundform eines Rechtecks ausgebildet ist.

2. Laserbearbeitungsanlage nach Anspruch 1, **dadurch gekennzeichnet, dass** der Adapter (3) auf dem Adaptergegenstück (4) mittels Stiftpassungen ausgerichtet ist, wobei die lösbaren Befestigungsmittel zur Verbindung des Adapters (3) mit dem Adaptergegenstück (4) verschraubbare Bolzen sind.

3. Laserbearbeitungsanlage nach Anspruch 1 oder 2, **dadurch gekennzeichnet, dass** das Adaptergegenstück (4) der stationären Basis (2.1) im oder am Erd- oder Fußboden ausgebildet ist.

4. Laserbearbeitungsanlage nach einem der Ansprüche 1 bis 3, **dadurch gekennzeichnet, dass** die stationäre Basisplattform (2.1) eine Lineareinheit ist.

5. Laserbearbeitungsanlage nach einem der Ansprüche 1 bis 4, **dadurch gekennzeichnet, dass** die mobile Basis (2.2) ein Fahrwerk (6) ist.

6. Laserbearbeitungsanlage nach Anspruch 5, **dadurch gekennzeichnet, dass** die mobile Basis (2.2) ein Raupenfahrwerk ist.

7. Laserbearbeitungsanlage nach Anspruch 5, **dadurch gekennzeichnet, dass** die mobile Basis (2.2) ein Rollenfahrwerk ist.

## Claims

1. Laser processing apparatus for laser hardening and laser deposition welding of one or more workpieces to be processed, comprising a processing laser, at least one base (2) and an industrial robot (1) attached to the base (2) for positioning and aligning the processing laser of the laser processing apparatus relative to the one or more workpieces to be processed, wherein
- the industrial robot (1) has a multi-axis movable robot arm with a pedestal,
- the industrial robot (1) is screwed to the pedestal of the robot arm on a plate-shaped adapter (3) of the laser processing apparatus,
**characterized in that**
- the plate-shaped adapter (3) is connectable to a plate-shaped adapter counterpart (4) of the laser processing apparatus located on the base (2) by means of releasable fastening means,
- the laser processing apparatus comprises both a stationary base (2.1) and a mobile base (2.2), wherein the industrial robot attached to the adapter (3) being connected either to the stationary base (2.1) or to the mobile base (2.2), wherein the adapter (3) and the adapter counterpart (4) are arranged precisely one above the other, and
- the plate-shaped adapter (3) is designed as a cuboid plate with the basic shape of a rectangle.

2. Laser processing apparatus according to claim 1, **characterized in that** the adapter (3) is aligned on the adapter counterpart (4) by means of pin fits, the releasable fastening means for connecting the adapter (3) to the adapter counterpart (4) being screwable bolts.

3. Laser processing apparatus according to claim 1 or 2, **characterized in that** the adapter counterpart (4) of the stationary base (2.1) is formed in or on the ground or floor.

4. Laser processing apparatus according to one of the claims 1 to 3, **characterized in that** the stationary base (2.1) is a linear unit.

5. Laser processing system according to one of the claims 1 to 4, **characterized in that** the mobile base (2.2) is a chassis (6).

6. Laser processing system according to claim 5, **characterized in that** the mobile base (2.2) is a crawler chassis.

7. Laser processing system according to claim 5, **characterized in that** the mobile base (2.2) is a roller chassis.

## Revendications

1. Installation industrielle laser pour le durcissement au laser et le rechargement au laser d'une ou plusieurs pièces à usiner, comprenant un laser d'usinage, au moins une base (2) et un robot industriel (1) monté sur la base (2) pour positionner et orienter le laser d'usinage de l'installation industrielle laser par rapport à une ou plusieurs pièces à usiner,
- le robot industriel (1) comportant un bras de robot mobile sur plusieurs axes avec un socle,
- le robot industriel (1) étant vissé avec le socle du bras de robot sur un adaptateur en forme de plaque (3) de l'installation industrielle laser, **caractérisée en ce que**,
- l'adaptateur (3) en forme de plaque peut être relié, à l'aide de moyens de fixation amovibles, à une contre-pièce d'adaptateur (4) en forme de plaque de l'installation industrielle laser, qui se trouve sur la base (2),
- l'installation industrielle laser comprend aussi bien une base fixe (2.1) qu'une base mobile (2.2), le robot industriel monté sur l'adaptateur (3) étant relié soit à la base fixe (2.1) soit à la base mobile (2.2), l'adaptateur (3) et la contre-pièce d'adaptateur (4) étant disposés exactement l'un au-dessus de l'autre, et
- l'adaptateur en forme de plaque (3) est réalisé sous la forme d'une plaque parallélépipédique ayant la forme de base d'un rectangle.

2. Installation industrielle laser selon la revendication 1, **caractérisée en ce que** l'adaptateur (3) est aligné sur la contre-pièce d'adaptateur (4) au moyen d'ajustements par goupilles, les moyens de fixation amovibles pour relier l'adaptateur (3) à la contre-pièce d'adaptateur (4) étant des boulons vissables.

3. Installation industrielle laser selon la revendication 1 ou 2, **caractérisée en ce que** la contre-pièce d'adaptateur (4) de la base fixe (2.1) est formée dans ou sur la terre ou le sol.

4. Installation industrielle laser selon l'une des revendications 1 à 3, **caractérisée en ce que** la plate-forme de base fixe (2.1) est une unité linéaire.

5. Installation industrielle laser selon l'une des revendications 1 à 4, **caractérisée en ce que** la base mobile (2.2) est un châssis (6).

6. Installation industrielle laser selon la revendication 5, **caractérisée en ce que** la base mobile (2.2) est un châssis à chenilles.

7. Installation industrielle laser selon la revendication 5, **caractérisée en ce que** la base mobile (2.2) est un châssis à rouleaux.
